# EUROPEAN PATENT SPECIFICATION

(11) **EP 3 896 545 B1**
(45) Date of publication and mention of the grant of the patent: **25.11.2026**
(21) Application number: 21166172.3
(22) Date of filing: 31.03.2021
(51) Int. Cl.: G05B 23/02

(54) **METHOD FOR ALARM HANDLING IN A PROCESSING SYSTEM**
VERFAHREN ZUR ALARMHANDHABUNG IN EINEM VERARBEITUNGSSYSTEM
PROCÉDÉ DE GESTION D'ALARME DANS UN SYSTÈME DE TRAITEMENT

(30) Priority: 14.04.2020 EP 20169418
(43) Date of publication of application: 20.10.2021
(73) Proprietor: ABB Schweiz AG, 5400 Baden (CH)
(72) Inventor: KOZIOLEK, Heiko, 76227 Karlsruhe (DE); RUECKERT, Julius, 63225 Langen (DE); SCHMIDT, Benedikt, 69117 Heidelberg (DE); KLOEPPER, Benjamin, 68199 Mannheim (DE)
(74) Representative: Maiwald GmbH

(56) References cited:
- CN-A- 106 452 927
- US-A1- 2010 313 074
- US-A1- 2013 235 041
- US-A1- 2018 224 831
- US-A1- 2020 002 098
- US-A1- 2020 036 595
- US-B1- 10 372 572

## Description

### Field of the Invention

The invention relates to the field of alarm handling in an industrial plant or a processing system, particularly for processing systems that can be represented as a graph. The invention further relates to a computer program product, a computer-readable storage medium, and to a use of the method.

### Background

Plant operations staff, e.g. operators, process engineers, automation engineers, or dispatchers, frequently need to get an overview of the status of the plant or production process, particularly in cases of alarms or in an otherwise crucial or interesting phase during the plant's operation. In some cases, it may be useful to get a better understanding of data of the processing system and/or of a topology of the plant and/or a connectivity of the plant's process elements.

Document CN 106 452 927 A discloses a business topology information display method and system of a cloud monitoring system.

Document US 2020 036 595 A1 relates to systems and techniques for custom graph generation.

Document US 2013 235 041 A1 relates to a method for supporting the fault diagnosis of an industrial installation, and an associated device.

Document US 2020 002 098 A1 relates to a method comprising obtaining and determining graph data, receiving of packaging plant status data, and determining a representative of the packaging process that is feasible by the packaging plant.

### Description

It is therefore an objective of the invention to provide a method to get a status or another attribute of at least some of the elements of interest in a plant or production process. This objective is achieved by the subject-matter of the independent claims. Further embodiments are evident from the dependent patent claims and the following description.

One aspect relates to a method for providing an attribute of an element in an industrial processing system comprising a plurality of elements according to claim 1.

An element or process element in or of an industrial processing system, may comprise, for instance, pumps, compressors, vessels or pressure vessels, tanks, heat exchangers, furnaces, fans, cooling towers, valves, etc. An attribute of a node - which represents an element - may comprise a "status" of the node, e.g. a process value like temperature, pressure, and the like, and/or a compound or derived value, such as "safe, critical, dangerous, damaging, ..."; this may comprise a categorization of the attribute(s). Each one of the nodes comprises or has an attribute. The attribute may be constant or empty. The attribute may comprise one attribute, a plurality of attributes, and/or a list of attributes.

Selecting one node as a starting node may comprise to select one or more arbitrary nodes, the selection may be triggered or motivated by an alarm or may be done to get a piece of information for some insights into the plant or production process. Constructing the subgraph may comprise to follow or proceed forward along the directed edges, from the starting node to a terminating node or to a node that has already been touched, e.g. in a cycle.

Outputting all nodes and the attribute of the nodes of the subgraph comprises to display or transmit a list of these nodes and its attributes, to display the subgraph as a topology-diagram with coloured nodes, the colour e.g. depending on its current criticality, and to present the topology-diagram as an interactive diagram, with "clickable nodes" that show upon request a list of attributes of the nodes of the subgraph.

This may contribute to provide a fast and clear overview about a current state of the plant or production process. It may help to step quickly into an evaluation procedure and/or to get fast access to process data, e.g. by the visualisation and the interactive display of relevant attributes and/or further data that may be related to the current state. This may contribute to accelerate repairing, and/or for fast reactions in alarm situations, for instance by analysing which process parts need to be switched off or can be run in safe parameter ranges. Further examples may comprise to conduct efficiency investigations, e.g. how to improve the efficiency of a heat exchanger, incident handling e.g. a failure of a compressor in compressor station, root cause analysis of defects or crucial situations, and/or further actions or uses. This may, e.g., be helpful in situations, when plant operations staff want to browse life data of a plant, for instance to analyse the current state with respect to a given or desired one. This may further contribute to be aware of the process topology for a well-guided proceeding. Furthermore, time and costs may be reduced, for tasks like manual anomaly investigation, complex and multi-device equipment failure mitigation, and/or root-cause analysis.

In various embodiments, the method further comprises the step of outputting a subset of the process values of the directed graph, wherein at least one attribute of at least one node of the directed graph is a process value. The outputting may comprise to display, visualize transmit, post-process the attribute(s), for instance on an alarm-screen, an analysis module, and/or other actions.

According to the invention, the selected node has an attribute that relates to an alarm. "Relate" may comprise to have been triggered or motivated by an alarm. An example may be an increased pressure that has become critical, and the method shows, e.g. to the operator, what elements are influenced by this node. Or, for example, if an increased temperature (i.e. attribute) of a vessel is indicated as alarm-trigger, to start the subgraph from the process element vessel. The alarm may comprise a compound or derived value, such as a categorization, e.g. of a pressure or temperature, as "safe / critical / dangerous / damaging".

According to the invention, the alarm is provided by analysing a time series of process values. For example, the alarm-trigger may not be a current state, but, e.g., may depend on a rapid change of a temperature, pressure, etc. This may be performed by a module that uses one or more time-series and event analyses to highlight particularly relevant equipment and process values in dynamically generated process graphics.

In some embodiments, the analysing is performed by an artificial neural net, ANN. The ANN may be trained by offering known time-series, for example time-series that are or have been related to an alarm. This may advantageously contribute to easier differentiate a critical increase of a temperature (etc.) from a non-critical one. The training - and/or the application of the trained ANN - may comprise to use a time-series and event analysis that, e.g., uses standard anomaly detection methods (Local-Outlier-Factor, One-Class-SVM, AutoEncoder, and/or further ones) to identify process values and events that should be displayed, and/or highlighted to the operator. The training may comprise an analysis of historical persistent disturbance, in particular of oscillatory disturbance. Further method, e.g. for getting additional insight on causality and timing is to analyse the cross-correlation and cross-entropy function around changes of the setpoint changes, in order to find out how strong a change propagates and how long it takes to propagate. A cross-correlation may exist, as an example, between a pressure increase in one element and a pressure decrease in one element. Hence, the machine learning by analysing time-series and event data may contribute to highlight interesting and relevant data points to the operator, for instance particularly relevant equipment and process values in dynamically generated process graphics.

In some embodiments, the time series of process values comprises historical data. Using historical data may provide a change to consider a development of crucial data, thus considering a piece of "future", when applied to a current situation or process value. Particularly, an analysis of historical persistant disturbance - in particular oscillatory disturbance - by means of e.g. cross-correlation analysis or cross-entropy may improve the quality of the alarm handling.

In various embodiments, the method further comprising the step of outputting a process status of the processing system, wherein the process status comprises at least one of: the subgraph, the process values of the directed graph, and/or the time series of process values.

The process status may be an indicator of a state of the complete processing system, or of a subsystem, e.g. of the subsystem defined by the subgraph. The process status is generated, possibly displayed and/or transmitted. This may include process equipment, process values, alarms and events relevant for the current analysis task. Process topology information may be derived from process flow diagram and made available during plant runtime, as described above and/or below.

There may be scenarios, in which information is spread across many screens and different data sources, such as process history, process flow diagram(s), and/or control system descriptions. Then, operators may need to switch between different screens displaying different parts of the process in order to collect all relevant information. This switching may make the task of alarm analysis challenging, because the operators needs to memorize all relevant information while switching between the screens. In such scenarios, the collection of the information may become time-consuming, error-prone and exhausting for the operations staff. Embodiments described here may use computer readable process topology information and process control system information, traverse the topology to identify relevant subgraphs, use machine learning methods like anomaly detection for time-series and event analysis to highlight relevant process values and events or filter out irrelevant ones and may generate a task specific graphical representation of the subgraph with embedded trend and event visualization and/or may generate task-specific user interfaces, such as operator screens. An embodiment may be also suitable for small screens. According to the invention, an API is provided to access topology information along with live process values and process control system equipment properties. The information provided may further be used for a root-cause analysis of alarms and/or crucial situations.

According to the invention, the processing system is represented by a process flow diagram, PFD, and/or a piping and instrumentation diagram, P&ID diagram. The PFD (etc.) may be used as a base for the directed graph comprising a plurality of nodes and directed edges. It may further be useful, that exchange formats for smart P&IDs have been standardized. This advantageously provides a common format for describing the process or the plant.

An aspect relates to a computer program product comprising instructions, which, when the program is executed by a computer, cause the computer to carry out the method as described above and/or below.

An aspect relates to a computer-readable storage medium where a computer program or a computer program product as described above is stored on.

An aspect relates to a use of a method as described above and/or below for an efficiency investigation of a plant or a subsystem, for an access, particularly for a fast access, to process data, and/or for incident handling of an element. This may contribute to accelerate repairing, and/or for fast reactions in alarm situations.

An aspect relates to an industrial plant or a processing system, comprising a computer on which instructions are stored, which, when the program is executed by the computer, cause the computer or the industrial plant to carry out the method as described above and/or below.

For further clarification, embodiments of the invention are described by means of embodiments shown in the figures. These embodiments are to be considered as examples only, but not as limiting.

### Brief Description of the Drawings

- **Fig. 1**: schematically shows an example of identifying a problem by monitoring process values and alarms in a process control system according to an embodiment;
- **Fig. 2**: schematically shows a flow chart of a method according to an embodiment;
- **Fig. 3**: schematically shows a flow chart of a further method according to an embodiment.

### Detailed Description of Embodiments

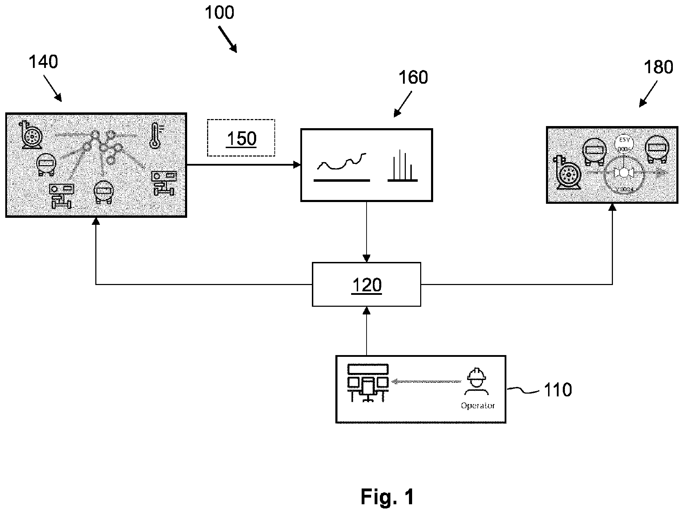

**Fig. 1** schematically shows an example of identifying a problem by monitoring process values and alarms in a process control system 100 according to an embodiment. An automated monitoring system 110 - or an operator - may identifies a problem, e.g. by monitoring process values and alarms in the process control system 100. This issues an agent 120, in order to find some context and/or further information related to the problem, for instance to find related process values and process equipment or elements. The agent 120 executes a query to module 140, to get process topology and/or further information. The query may be specified based on connectivity information in the process flow, all meta information from a PFD or a smart P&ID diagram - such as media type, pipe diameter, alarm levels, etc. -, and attributes (e.g. equipment properties) derived from the process control system. Then, one node in a directed graph related to the topology description is selected as a starting node. From this, the directed graph is traversed to construct a subgraph 150, thus finding related process values and equipment tags, i.e. nodes and its attributes.

The list of identified process values and process tags may be passed to an (optional) time-series and event analysis module 160 that uses standard anomaly detection methods - e.g. Local-Outlier-Factor, One-Class-SVM, AutoEncoder - to identify process values and events that should be highlighted to the operator. The time-series and event analysis may also use standard methods for correlation and/or cross-correlation analysis to identify process values that probably have a causal relationship with identified untypical process value or event, e.g. by combining the information about cross-correlation and the relationship in the topology. The results of the modules 140 and/or 160 are pass to display, visualization, or task-specific user interface 160, to provide a fast, and in some embodiments an interactive, analysis and/or evaluation of the alarm or situation of interest.

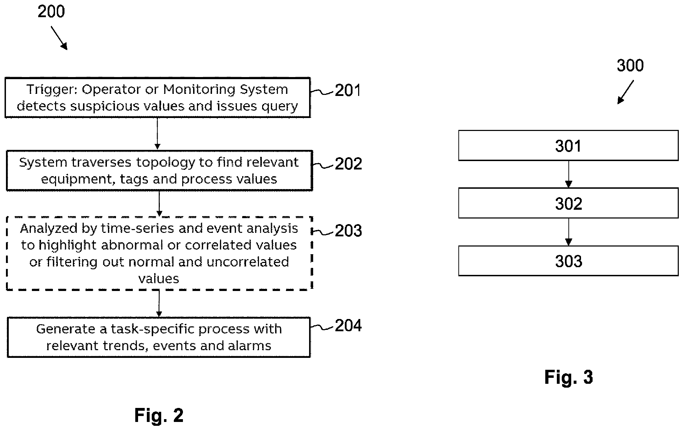

**Fig. 2** schematically shows a flow chart 200 of a method according to an embodiment. In a step 201, a trigger is sent by a system and/or operator. In a step 202, a query is performed, for which a directed graph related to the system's topology is traversed, for constructing a subgraph. In an optional step 203, a time-series and event analysis is performed. This is to highlight abnormal and/or correlated values, and/or for filtering out normal and/or uncorrelated values, thus reducing advantageously the information that may be provided to a human operator. In a step 204, a task-specific process and/or user interface is generated, which reflects relevant trends, event, and alarms.

**Fig. 3** schematically shows a flow chart 300 of a method for providing an attribute of an element in a processing system comprising a plurality of elements, wherein the processing system is represented as a directed graph comprising a plurality of nodes and directed edges, wherein each node represents an element, each node has an attribute, and each directed edge represents a relation between two elements of the plurality of elements. In a step 301, one node of the plurality of nodes is selected as a starting node. In a step 302, a subgraph is constructed, wherein the subgraph consists of all the nodes that are forward-connected by at least one directed edge from the starting node. In a step 303, all nodes and the attribute of the nodes of the subgraph output, i.e. displayed, visualized, and/or a task-specific user interface is generated.

## Claims

1. A computer-implemented method for providing an attribute of an element in an industrial processing system comprising a plurality of elements, wherein the processing system is represented as a directed graph, which is based on a process flow diagram, PFD, and/or a piping and instrumentation diagram, P&ID diagram, the directed graph comprising a plurality of nodes and directed edges,
wherein each node represents an element of the plurality of elements, each node has an attribute, and each directed edge represents a relation between two elements of the plurality of elements, the method comprising the steps of:
accessing, via an API, topology information of the industrial processing system along with live process values of the industrial processing system and equipment properties of the industrial processing system;
providing an alarm by analysing a time series of the process values; selecting (301) one node of the plurality of nodes as a starting node, wherein the selected node has an attribute that relates to the alarm;
constructing (302) a subgraph, wherein the subgraph consists of all the nodes that are forward-connected by at least one directed edge from the starting node; and
outputting (303) all nodes and the attribute of the nodes of the subgraph, the outputting comprising displaying the subgraph as a topology-diagram with coloured nodes, wherein the topology-diagram is presented as an interactive diagram that shows upon request a list of attributes of the nodes of the subgraph.

2. The method of claim 1, further comprising the step of:
outputting a subset of process values of the directed graph,
wherein at least one attribute of at least one node of the directed graph is a process value.

3. The method of claim 1, wherein the analyzing is performed by an artificial neural net, ANN.

4. The method of claim 1 or 3, wherein the time-series of the process values comprises historical data.

5. The method of any one of the preceding claims, further comprising the step of:
outputting a process status of the processing system,
wherein the process status comprises at least one of: the subgraph, the process values of the directed graph, and/or the time-series of the process values.

6. A computer program product comprising instructions, which, when the program is executed by a computer, cause the computer to carry out the method according to any one of the preceding claims.

7. A computer-readable storage medium where a computer program according to claim 6 is stored on.

8. Use of a method according to any one of the claims 1 to 5 for an efficiency investigation of a plant or a subsystem, for an access to process data, and/or for incident handling of an element.

9. An industrial plant or a processing system, comprising a computer, on which instructions are stored and which, when the program is executed by the computer, cause the computer, the industrial plant, or the processing system to carry out the method according to any one of claims 1 to 5.

## Patentansprüche

1. Computerimplementiertes Verfahren zum Bereitstellen eines Attributs eines Elements in einem industriellen Verarbeitungssystem, das eine Vielzahl von Elementen umfasst,
wobei das Verarbeitungssystem als ein gerichteter Graph dargestellt ist, der auf einem Prozessablaufdiagramm, PFD, und/oder einem Piping and Instrumentation Diagram, P&ID Diagramm, basiert, wobei der gerichtete Graph eine Vielzahl von Knoten und gerichteten Kanten umfasst,
wobei jeder Knoten ein Element der Vielzahl von Elementen darstellt, jeder Knoten ein Attribut aufweist und jede gerichtete Kante eine Beziehung zwischen zwei Elementen der Vielzahl von Elementen darstellt, wobei das Verfahren die folgenden Schritte umfasst:
Abrufen, über eine API, von Topologieinformationen des industriellen Verarbeitungssystems, zusammen mit aktuellen Prozesswerten des industriellen Verarbeitungssystems und Geräteeigenschaften des industriellen Verarbeitungssystems;
Auslösen eines Alarms durch Analyse einer Zeitreihe der Prozesswerte;
Auswählen (301) eines Knotens aus der Vielzahl von Knoten als Startknoten, wobei der ausgewählte Knoten ein Attribut aufweist, das sich auf den Alarm bezieht;
Erstellen (302) eines Teilgraphen, wobei der Teilgraph aus allen Knoten besteht, die durch mindestens eine gerichtete Kante vom Startknoten aus vorwärts verbunden sind; und
Ausgeben (303) aller Knoten und des Attributs der Knoten des Teilgraphen,
wobei das Ausgeben das Anzeigen des Teilgraphen als Topologiediagramm mit farbigen Knoten umfasst, wobei das Topologiediagramm als interaktives Diagramm dargestellt wird, das auf Anfrage eine Liste von Attributen der Knoten des Teilgraphen anzeigt.

2. Verfahren nach Anspruch 1, das ferner den folgenden Schritt umfasst:
Ausgeben einer Teilmenge von Prozesswerten des gerichteten Graphen,
wobei mindestens ein Attribut mindestens eines Knotens des gerichteten Graphen ein Prozesswert ist.

3. Verfahren nach Anspruch 1,
wobei die Analyse durch ein künstliches neuronales Netz (ANN) durchgeführt wird.

4. Verfahren nach Anspruch 1 oder 3,
wobei die Zeitreihe der Prozesswerte historische Daten umfasst.

5. Verfahren nach einem der vorstehenden Ansprüche, das ferner den folgenden Schritt umfasst:
Ausgeben eines Prozesszustands des Verarbeitungssystems,
wobei der Prozessstatus mindestens eines der folgenden Elemente umfasst: den Teilgraphen, die Prozesswerte des gerichteten Graphen und/oder die Zeitreihe der Prozesswerte.

6. Computerprogrammprodukt, das Anweisungen umfasst, die, wenn das Programm von einem Computer ausgeführt wird, den Computer veranlassen, das Verfahren gemäß einem der vorstehenden Ansprüche durchzuführen.

7. Ein computerlesbares Speichermedium, auf dem ein Computerprogramm gemäß Anspruch 6 gespeichert ist.

8. Verwendung eines Verfahrens gemäß einem der Ansprüche 1 bis 5 zur Effizienzuntersuchung einer Anlage oder eines Teilsystems, zum Zugriff auf Prozessdaten und/oder zur Störungsbehebung eines Elements.

9. Industrieanlage oder Verarbeitungssystem, umfassend einen Computer, auf dem Befehle gespeichert sind und die, wenn das Programm von dem Computer ausgeführt wird, den Computer, die Industrieanlage oder das Verarbeitungssystem veranlassen, das Verfahren gemäß einem der Ansprüche 1 bis 5 durchzuführen.

## Revendications

1. Procédé mis en œuvre par ordinateur pour fournir un attribut d'un élément dans un système de traitement industriel comprenant une pluralité d'éléments,
le système de traitement étant représenté sous la forme d'un graphe orienté, qui est basé sur un diagramme de flux de processus, PFD, et/ou un diagramme de tuyauterie et d'instrumentation, un diagramme P&ID, le graphe orienté comprenant une pluralité de nœuds et d'arêtes orientées,
chaque nœud représentant un élément de la pluralité d'éléments, chaque nœud ayant un attribut, et chaque arête orientée représentant une relation entre deux éléments de la pluralité d'éléments, le procédé comprenant les étapes de :
l'accès, par l'intermédiaire d'une API, aux informations topologiques du système de traitement industriel ainsi qu'aux valeurs de processus en direct du système de traitement industriel et aux propriétés des équipements du système de traitement industriel ;
la fourniture d'une alarme en analysant une série temporelle des valeurs de processus ;
la sélection (301) d'un nœud de la pluralité de nœuds comme nœud de départ, le nœud sélectionné ayant un attribut relatif à l'alarme ;
la construction (302) d'un sous-graphe, le sous-graphe étant constitué de tous les nœuds qui sont reliés vers l'avant par au moins une arête orientée à partir du nœud de départ ; et
l'émission en sortie (303) de tous les nœuds et de l'attribut des nœuds du sous-graphe, l'émission en sortie comprenant l'affichage du sous-graphe sous la forme d'un diagramme de topologie avec des nœuds colorés, le diagramme de topologie étant présenté sous la forme d'un diagramme interactif qui présente sur demande une liste d'attributs des nœuds du sous-graphe.

2. Procédé selon la revendication 1, comprenant en outre l'étape suivante :
l'émission en sortie d'un sous-ensemble de valeurs de processus du graphe orienté,
au moins un attribut d'au moins un nœud du graphe orienté étant une valeur de traitement.

3. Procédé selon la revendication 1,
l'analyse étant effectuée par un réseau de neurones artificiel, ANN.

4. Procédé selon la revendication 1 ou 3,
la série temporelle des valeurs de processus comprenant des données historiques.

5. Procédé de l'une quelconque des revendications précédentes, comprenant en outre l'étape de :
l'émission en sortie d'un état de processus du système de traitement,
l'état de processus comprenant au moins l'un des éléments suivants : le sous-graphe, les valeurs de processus du graphe orienté, et/ou les séries temporelles des valeurs de processus.

6. Produit programme informatique comprenant des instructions, qui, lorsque le programme est exécuté par un ordinateur, amènent l'ordinateur à mettre en œuvre le procédé selon l'une quelconque des revendications précédentes.

7. Support de stockage lisible par ordinateur, sur lequel est stocké un programme informatique selon la revendication 6.

8. Utilisation d'un procédé selon l'une quelconque des revendications 1 à 5 pour une étude d'efficacité d'une installation ou d'un sous-système, pour un accès à des données de processus, et/ou pour une manipulation d'incident d'un élément.

9. Installation industrielle ou système de traitement, comprenant un ordinateur, sur lequel des instructions sont stockées et qui, lorsque le programme est exécuté par l'ordinateur, amènent l'ordinateur, l'installation industrielle ou le système de traitement à mettre en œuvre le procédé selon l'une quelconque des revendications 1 à 5.
